# NEW EUROPEAN PATENT SPECIFICATION

(11) **EP 1 322 693 B2**
(45) Date of publication and mention of the opposition decision: **18.08.2010**
(45) Mention of the grant of the patent: 29.11.2006
(21) Application number: 00963662.2
(22) Date of filing: 21.09.2000
(51) Int. Cl.: C08G 64/40, B01D 17/02

(54) **PROCESS FOR THE PURIFICATION OF POLYCARBONATE CONTAINING SOLUTIONS BY PLATE DECANTATION**
VERFAHREN ZUR REINIGUNG VON POLYCARBONAT ENTHALTENDEN LÖSUNGEN UNTER VERWENDUNG EINER DEKANTIER-PHASENTRENNVORRICHTUNG
PROCEDE DE PURIFICATION DE SOLUTIONS RENFERMANT DU POLYCARBONATE PAR DECANTATION SUR PLAQUE

(43) Date of publication of application: 02.07.2003
(73) Proprietor: SABIC Innovative Plastics IP B.V., 4612PX Bergen op Zoom (NL)
(72) Inventor: GOOL VAN, Cornelis, Adrianus, Ma, NL-4708 CA Roosendaal (NL); OYEVAAR, Martin, Herke, NL-4461 SC Goes (NL); WARREN, Anthony, Evansville, IN 47715 (US); TINNEY, Claude, Montgomery, AL 36116 (US); ZHU, Mingjie, Evansville, IN 47712 (US)
(74) Representative: Modiano, Micaela Nadia
(86) International application number: PCT/US2000/025784
(87) International publication number: WO 2002/024784

(56) References cited:
- EP-A- 1 020 483
- WO-A-93//02762
- DE-A- 19 510 061
- DE-A- 19 849 004
- DE-U- 9 403 773
- GB-A- 2 116 447
- US-A- 3 957 656
- US-A- 4 664 754
- US-A- 5 242 604
- US-A- 5 837 152
- PATENT ABSTRACTS OF JAPAN vol. 008, no. 079 (P-267), 11 April 1984 (1984-04-11) -& JP 58 223023 A (NIPPON KOKAN KK), 24 December 1983 (1983-12-24)
- DATABASE WPI Section Ch, Week 198426 Derwent Publications Ltd., London, GB; Class J01, AN 1984-162028 XP002177037 -& JP 59 087008 A (SUMITOMO CHEM CO LTD), 19 May 1984 (1984-05-19)
- FRANKEN FILTERTECHNIK & PHASENTRENNUNG: 'franken-mehrphasentrenner' MPT-MODULE 1994, HÜRTH,

## Description

This invention relates to an improved process for the purification of polycarbonate containing solutions obtained in a two phase interfacial synthesis process. The process provides for the use of at least one plate decanter to separate and purify the polycarbonate containing solution.

### BACKGROUND OF INVENTION

There are many well known processes for the preparation of polycarbonates from monomers. A preferred method is a two-phase interfacial process in which phosgene is contacted with aromatic bisphenols and condensed to produce high molecular weight polycarbonates.

The two-phase interfacial process results in a reaction mixture which is an emulsion of organic and aqueous alkaline phases. In order to recover the polycarbonate product from the organic phase in which it is found, the reaction mixture must first be separated into its organic and aqueous alkaline phases, and the organic phase must be further processed to remove undesirable impurities including electrolytes, catalysts, residues of chain terminators, and unreacted starting materials.

Typically, such reaction mixtures contain polycarbonate polymers with molecular weights up to 250,000 g/mol on a polycarbonate basis and salts present in an amount up to one quarter by weight of the reaction mixture. Further, the reaction mixtures may exhibit a wide range of viscosities. In conventional processes, the initial separation of the aqueous alkaline phase from the organic phase is not complete, but leaves the organic phase containing some ten percent or more of an aqueous component. Further, the organic phase contains residual impurities such as catalysts, residues of chain terminators, and unreacted bisphenols. Thus, additional steps are required to purify the organic phase.

For example, U.S. Patent No. 4,338,429 describes removing alkali metal hydroxide, catalyst, and salts from the organic phase by repeated settling or centrifugation, with the addition of either aqueous acid or water in each step. The process is enhanced by the addition of shear energy and/or cationic emulsifying agents and dispersing agents to the aqueous acid step, or water-soluble organic anionic compounds to the water step.

Another method for purifying the organic phase is coalescence, as described in U.S. Patent No. 4,316,009 and German Patent DE 19510061. The continuous process described therein involves washing and reemulsification, followed by reseparating the two phases by conveying the emulsion through a layer of fibers that causes coalescence of the separate phases.

Another method for purifying the organic phase is to employ a series of centrifuges to remove the residual aqueous component by application of very high gravitational forces, as described in U.S. Patent No. 5,260,418. In this process, the separated organic phase is further contacted with water and various aqueous solutions to bring the impurities into the aqueous component, which is removed and discarded.

Phase separation and purification processes employing centrifuges are time consuming and expensive to install and operate. Moreover, alternative purification methods such as extraction by countercurrent water washing and gravity separation of the two phases are much slower and less efficient. Accordingly, there is a need to provide a method for the separation and purification of reaction mixtures resulting from the two-phase interfacial process for making polycarbonate which is efficient and economical.

### SUMMARY OF THE INVENTION

Therefore, it is an object of the present invention to provide an economical and efficient process for the separation and purification of a reaction mixture obtained in a two-phase interfacial process for making polycarbonates.

These and other objects of the invention are obtained by introducing the reaction mixture into a separation device comprising at least one plate decanter thereby separating the reaction mixture into an organic phase and an aqueous phase. The separation may be carried out using a combination of plate decanters, coalescers decanters, and centrifuges, which are operated in series or in parallel. Plate decanters in combination with such other devices provide efficient and effective separation of the reaction mixture into an organic phase containing the polycarbonate, and an aqueous waste phase.

In one embodiment, two plate decanters are operated in series. The plate decanters in series may precede or follow other separation devices, or may receive reaction mixture effluent directly from a reactor.

In an alternate embodiment, the separation devices are combined in a plate decanter/coalescer decanter array comprising a plurality of units comprising at least one plate decanter. The array comprises m rows where each row consists of n units in series, in which the organic phase output of each unit is connected with the outputs of units having the same value of n in other rows. The organic phase outputs of the last unit of each row of the array are combined thereby separating a reaction mixture into an organic phase and an aqueous phase. The organic phase may be conveyed into a series of centrifuges, and then into another array in a repetitive process.

By the process of this invention it is possible to separate and purify the reaction mixture in a highly efficient and economic manner.

### BRIEF DESCRIPTION OF THE DRAWINGS

For a better understanding of the present invention and its objects, reference is made to the detailed description below to be considered in light of the complete application, the scope of this invention as pointed out in the appended claims, and in combination with the drawings of which:
FIG. 1 is a schematic of a separation network which includes two plate decanters and three centrifuges arranged in series in accordance with the invention;
FIG. 2 is schematic illustrating an array of plate decanter and, optionally coalescer decanters, used to form a separation network in combination with centrifuges in accordance with the invention;
FIG. 3 is a schematic illustrating a separation network which includes two plate decanters in series before six centrifuges arranged in parallel in accordance with the invention and
FIG. 4 is a sectional view of a plate decanter including a sonar probe in accordance with the invention.

### DETAILED DESCRIPTION OF THE EMBODIMENTS

This invention provides a process for the separation and purification of reaction mixtures obtained in the process for preparation of polycarbonate by two-phase interfacial polymerization. The process of this invention employs one or more plate decanter separation devices in combination with coalescer decanters and/or centrifuge type separation devices.

The reaction mixture to be separated with this invention is the effluent from a resin reactor producing polycarbonate. Polycarbonate can be produced in batch or continuous mode by a two-phase interfacial process. The resin reactor effluent comprises a heavy organic component including the desired polycarbonate and a light aqueous inorganic component. Typically, the ratio of the aqueous phase to the organic phase is 10:90 to 50:50 weight percent. The polycarbonate component is typically present in an amount of 10 to 20 weight percent. The polycarbonate contained in the effluent may have, but is not limited to, molecular weight from about 15,000 to about 40,000 g/mol on a polycarbonate basis. Consequently, the effluent may have a wide range of viscosities. The effluent may also have, but is not limited to, a salt concentration of 14-22 weight percent.

The plate decanter consists of a container having a long axis which is oriented at an angle with respect to gravity, the angle typically being from 30° to 60°, preferably about 45°. The decanter is filled with plates, which also are therefore at the same angle. Preferably, the plates have a corrugated structure. A fluid mixture to be separated is introduced into the top of the plate decanter, and under the influence of gravity the heavier phase flows to the bottom of the decanter while the lighter phase flows to the top. The principles governing gravity decantation of an emulsion are based on Stoke's Law. For example, in a decanter, as the difference in density between the dispersed and continuous phases of an emulsion increases, the separation time decreases.

The use of a plate decanter is combined in one embodiment with coalescence devices. Coalescence is the process by which droplets of the dispersed phase of an emulsion are brought together to form a continuous phase. It is known to those of skill in the art that coalescence of polycarbonate dispersions can be achieved by conducting the dispersion through a layer of fibers, preferably glass, steel, or polymeric fibers.

More particularly, coalescing elements are added to the interior of an empty decanter. Preferably, the coalescing elements are a combination of metal and teflon such as elements available from Otto York. The coalescing size and number so as to provide a residence time in the decanter of 3 to 4 minutes, preferably, 1.5 to 2 minutes. The combination of a plate decanter with coalescing devices and/or centrifuges is an embodiment of this invention.

In an alternate embodiments, one or more plate decanters is combined with other separation devices including decanter coalescers and centrifuges. Various combinations of these devices can be used to separate polycarbonate reactor effluent.

In preferred embodiments of the invention, the operating temperatures for all streams are from 60° to 100 °F and more preferably 80-100°F. The operating pressures for all streams are preferably 0-100 psig, more preferably 30 - 80 psig, and most preferably 30 - 80 psig (pounds per square inch guage).

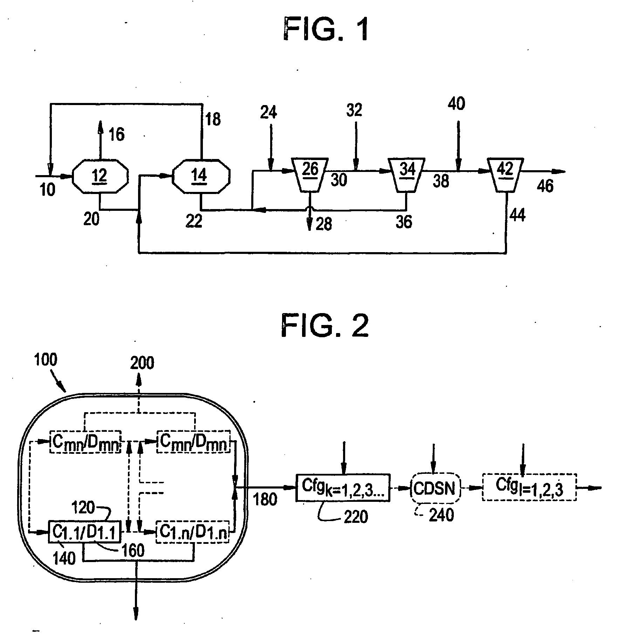

In the embodiment shown in Fig.1, plate decanters may be combined with centrifuges, to separate a reaction mixture. A reaction mixture **10** can be introduced into a series of separation devices including first **12** and second **14** plate decanters which will separate the emulsified reaction mixture into first **16** and second **18** lighter aqueous phases, and first **20** and second **22** heavier organic phases. Preferably, the residence time in each of the plate decanters is 5 to 6 minutes. The lighter aqueous brine phase **16** will be removed from the plate decanter **12** and discharged. The second lighter aqueous phase **18** will be removed from the second plate decanter **14** and recycled back into the original reaction mixture **10.** The second heavier organic phase **22** will be acidified with HCl **24** and separated in a first centrifuge **26.** The wastewater **28** will be removed from the first centrifuge **26** and the organic phase from the first centrifuge **30** will be mixed with water **32** and added to a second centrifuge in series **34.** The wastewater **36** from the second centrifuge **34** will be recycled with organic phase **22** from the second decanter **14** The organic phase from the second centrifuge **38** will be mixed with water **40** and added to a third centrifuge **42** after centrifugation. The wastewater **44** from the third centrifuge **42** will be recycled with organic phase **20** from the first decanter **12.**

This invention is not limited to embodiments consisting of regular arrays, but is also directed to embodiments in which the reaction mixture is conducted into a separation network comprising a plurality of plate decanters and a plurality of coalescers which are operated in series or in parallel. The outputs of the plate decanters and coalescer decanters may be combined in any order, thereby separating the reaction mixture into an organic phase and an aqueous phase. The organic phase from the network may be conducted into a series of centrifuges, and then into another network in a repetitive process.

Fig. 2 illustrates an alternate embodiment in which an array **100** of plate decanters and decanter coalescers is used for the separation of the reaction mixture containing polycarbonate. The array hereinafter referred to as a Coalescer/Decanter Separation Network, "CDSN" comprises a plurality of units **120** consisting of a plate decanter **160** and/or decanter coalescers **140.** The array comprises m rows where each row consists of n units in series, and in which the organic phase output of each unit is connected with the outputs of units having the same value of n in other rows. The organic phase outputs of the last unit of each row of the array are combined thereby separating a reaction mixture into an organic phase **180** and an aqueous phase **200.** The organic phase may be conducted into a series of centrifuges **220,** and then into another array in a repetitive process. The series of centrifuges, "Cfgₖ" **220** where k= 1,2,3 ... etc, can be used for acid or water washing of the organic phase. Optionally, the resulting organic phase **190** obtained may be separated in a second array **240.** The second array of separation devices CDSN, may be the same or different than the first array of separation devices.

When one separation device is operated in " series" to a second separation device, it is meant that the output of one device, for example the organic phase output, is provided as the input to the second device. Thus, a "series of devices" means a plurality of devices operating in series pairwise to form one serial chain. When one separation device is operated in "parallel" to a second separation device, it is meant that the corresponding outputs of each device, for example the organic phase outputs, are combined to provide one stream in a further process.

In all embodiments of this invention, the separation devices operate to divide the dispersion into light and heavy phases. In addition to the input of a polycarbonate dispersion, each device may have inputs at various points for charging water or other solutions, including charging heavy or light phases conducted to the device from another portion of the process. Each device may also have more than one point from which particular outputs, for example the light phase, are conducted.

The following examples further describe and demonstrate embodiments within the scope of the present invention. The examples are given solely for the purpose of illustration and are not to be construed as limitations of the present invention.

### Example 1

A plate decanter was tested on a polycarbonate resin separation line consisting of three centrifuges. A primary centrifuge was used for resin and brine separation. A second centrifuge was used for acid washing the resin solution to reduce the chloride concentration in the third centrifuge to avoid excessive corrosion in the third centrifuge.

In order to test the use of a plate decanter, a 200 liter decanter unit from Esmitec/FIB was tested on the discharge of a feed pump of the resin separation line. The separated light and heavy organic phases from the top and bottom of the decanter were fed back to the input of the centrifuge feed pump.

The feed mixture of the decanter consisted of both an aqueous phase, brine or wash water, and an organic phase, polycarbonate resin dissolved in methylene chloride. The feed mixture entered the decanter through a feed line. The aqueous phase, being the light phase, flows to the top of the decanter while resin solution flows to the bottom. The feed flow was varied and adjusted by the visual inspection of the water phase. When large droplets of heavy phase were seen in the light phase sight glass, the feed flow was reduced.

For testing the decanter as an input device for the first centrifuge, separation efficiency was detected at the second centrifuge. A resin solution sample i.e. the heavy phase was removed at the second centrifuge and mixed with 10 vol% pure distilled water, stirred, and separated. The separated water was analyzed for chloride. The water phase was sampled and visually inspected, and judged on the same basis as a water sample from the centrifuge.

A base-line study conducted over a period of eight weeks before installing the decanter gave an average chloride concentration in the water discharge of the second centrifuge of 7184mg/L solution, maximum 10678, minimum 3964, standard deviation 1972. This corresponds to a carryover of 1.39 weight percent brine in the output organic phase from the first centrifuge.

By comparison, the heavy phase leaving the decanter was sampled and analyzed for chloride. The average chloride concentration in this extraction water was 2766, standard deviation 2523, brine carry-over 0.53%.

This test showed very good separation on both phases at a feed flow of 1600 to 2000 It./hr. During the total test time of 4 weeks no rag layer formation at the interface was observed.

### Example 2

A reaction mixture containing polycarbonate can be prepared using an interfacial reaction process. Such a reaction mixture may be separated and purified using two plate decanters and three centrifuges in accordance with the process shown in Fig. 1. A calculation using mass balance assuming an input stream composition, brine carry-over and polycarbonate content in accordance with Example 1 was performed.

The results are summarized in Table 1 where PC = polycarbonate, MeCl₂ = methylene chloride, BPA = bisphenol A and TEA is triethylamine. Final outflow of the purified organic phase consisted of 0.5 weight percent water carryover.

**TABLE 1**

| | 10 | 16 | 20 | 18 | 22 | 28 | 30 | 36 | 38 | 44 | 46 | 24 | 32 | 40 |
|---|---|---|---|---|---|---|---|---|---|---|---|---|---|---|
| Fig 1 table | wt% | wt% | wt% | wt% | wt% | wt% | wt% | wt% | wt% | wt% | wt% | wt% | wt% | wt% |
| H2O | 19.75 | 78.60 | 0.79 | 97.66 | 0.98 | 98.90 | 0.20 | 99.49 | 0.20 | 99.50 | 0.50 | 67.00 | 99.90 | 99.90 |
| NaOH | 0.00 | 0.00 | 0.00 | 0.00 | 0.00 | - | - | - | - | - | - | | - | - |
| Na2CO3 | 0.45 | 1.32 | 0.01 | 0.11 | 0.00 | - | - | - | - | - | - | | | |
| NaCl | 6.68 | 19.57 | 0.20 | 1.70 | 0.02 | 0.14 | 0.00 | 0.00 | 0.00 | 0.00 | 0.00 | | 0.00 | 0.00 |
| HCl | - | - | - | - | - | 0.10 | 0.00 | 0.00 | 0.00 | 0.00 | 0.00 | 33.00 | - | - |
| MeCl2 | 60.59 | 0.41 | 82.03 | 0.41 | 82.04 | 0.41 | 82.74 | 0.41 | 82.74 | 0.41 | 82.49 | | 0.10 | 0.10 |
| PC | 12.49 | 0.09 | 16.91 | 0.09 | 16.91 | 0.09 | 17.06 | 0.09 | 17.06 | 0.09 | 17.00 | | | |
| BPA | 0.00 | 0.00 | 0.00 | 0.00 | 0.00 | 0.00 | 0.00 | 0.00 | 0.00 | 0.00 | 0.00 | | | |
| TEA | 0.04 | 0.01 | 0.05 | 0.03 | 0.05 | 0.37 | 0.00 | 0.01 | 0.00 | 0.00 | 0.00 | | | |
| Temp, F | 60-100 | 60-100 | 60-100 | 60-100 | 60-100 | 60-100 | 60-100 | 60-100 | 60-100 | 60-100 | 60-100 | 60-100 | 60-100 | 60-100 |
| pH | | 10.40 | | 9.34 | | 1.58 | | 3.37 | | 5.12 | | (0.96) | 7.00 | 7.00 |

### Example 3

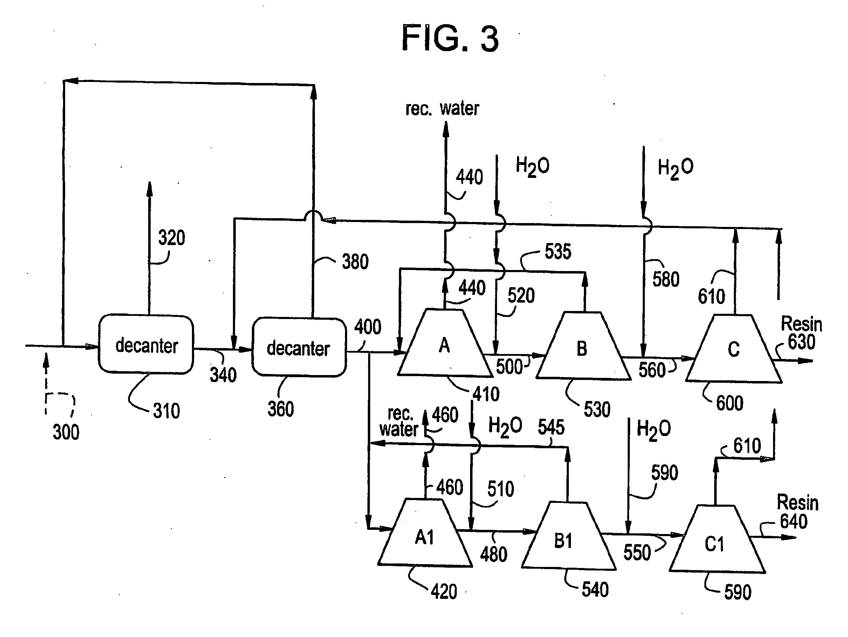

An alternate separation network including two plate decanters in series in continuation with two sets of three centrifuges in parallel is shown in Fig. 3 Effluent **300** from a plant reactor preparing polycarbonate using a two phase interfacial process is introduced into a plate decanter **310** which separates the effluent into a lighter brine phrase **320** and a heavier organic phase **340.** The lighter brine phase is discarded. The heavier organic phase **340** is introduced into a second decanter **360.** The second lighter phase **380** is removed from the second decanter **360** and recycled back into the effluent **300.** The second heavier organic phase **400** is split. A portion of the second organic phase **400** is received by centrifuge A **410** and the reminder is received by centrifuge A1 **420.** The lighter aqueous phases **440** and **460** are removed from centrifuge A and Al, respectively and recycled for the water content. The heavier organic phases **480** and **500** are removed from centrifuge A and A1, mixed with water **510** and **520** and added to the second centrifuges in series B, **530** and B1, **540,** respectively. The light aqueous phases **535** and **545** are removed from the B and B1 centrifuges, are recycled with heavy phase **400** from the second decanter **360.** The heavy phases **550** and **560** are removed from the B and B1 centrifuges mixed with water **570, 580** and added to centrifuge C **600** and C1 **590,** respectively. The light aqueous phases **610** and **630** are removed from centrifuges C and Cl and recycled with heavy phase **340** from decanter **310.** The heavy phases **630** and **640** are removed from centrifuges C and C1 and polycarbonate resin obtained therefrom.

### Example 4

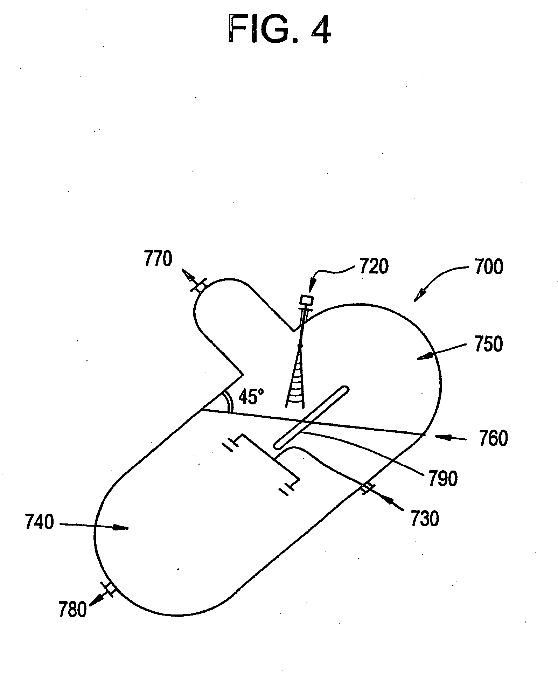

A reactor effluent solution having a polycarbonate concentration of 10-18 weight per cell in the organic phase and a brine or aqueous phase having a specific gravity of 1.0 to 1.16 was fed into and removed continuously from a plate decanter. The feed rate provided a residence time in the decanter of between 10 to 30 minutes. Continuous operation and a limited residence time created some waves or turbulence around the interface which made interface detection difficult. The decanter **700** was fitted with a sonar probe **720** of the top - down type available from Accu-Gage as shown in Fig. 4. Effluent solution entered the decanter **700** through feed inlet port **730.** The effluent separated into an organic phase **740** and a brine phase **750** with interface **760** therebetween. The lighter brine phase was removed through the brine outlet **770** located at the top of the decanter and the heavier organic phase was removed through the organic phase outlet **780** at the bottom of the decanter. Optionally, additional plates may be placed in brine outlet **770** which may improve separation. The results of the interface measurement using the probe as compared with visual observations using a sight glass **790** on the outside of the decanter are given in Table 2.

**Table 2**

| | |
|---|---|
| Average measurement errors | 4.98 cm |
| Standard Deviation of Measurement Errors | 2.62 cm |
| Number of Measurements | 93 |
| Measurement range | 0-50 cm |

The average measurement errors reported in Table 2 is the difference between the average value of the interface location obtained using the 93 probe measurements versus the average of 93 visual observations. The standard deviation of measurement errors was calculated from the sonar probe measurements and average sonar probe value. The average measurement errors should be reduced by recalibration of the probe transducer. In addition, there was a contribution to the standard derivation of measurement errors by the visual observation measurement due to wave formation at the interface and the large size of the decanter. Other test probes such as differential pressure or nuclear probes yielded less accurate and less reliable results than the sonar or ultrasonic probe.

## Claims

1. A continuous process for the removal of impurities from a reaction mixture comprising polycarbonate, comprising:
(a) providing a reaction mixture from a two-phase interfacial reaction for the preparation of polycarbonate; and
(b) conveying the reaction mixture into a separation device comprising at least one plate decanter thereby separating the reaction mixture into an organic phase and an aqueous phase,
further comprising conveying the organic phase from the plate decanter into at least one centrifuge thereby separating a wastewater phase from the organic phase or
further comprising conveying the organic phase from the at least one plate decanter into at least one coalescer decanter thereby separating a wastewater phase from the organic phase.

2. The continuous process according to claim 1, further comprising conveying the organic phase from the at least one coalescer decanter to at least one centrifuge thereby separating a wastewater phase from the organic phase.

3. The continuous process according to claim 1, further comprising conveying the organic phase from the at least one plate decanter into a first centrifuge of a cascade of centrifuges Cfgₖ arranged in series thereby separating a wastewater phase Wₖ from the organic phase Oₖ and conveying the separated organic phase to the next centrifuge Cfgₖ in series which separates the conveyed Oₖ₋₁ phases into an organic phase Oₖ and a wastewater phase Wₖ.

4. The continuous process according to claim 3 wherein k = 1, 2 or 3.

5. The continuous process according to claim 1, further comprising conducting the organic phase from the at least one plate decanter into a cascade of coalescer decanters Cₙ arranged in series thereby separating a wastewater phase Wₙ from the organic phase Oₙ end conveying the organic phase Oₙ₋₁ into the next coalescer decanter Cₙ in series and separating an organic phase Oₙ and a wastewater phase Wₙ.

6. The continuous process according to claim 1 further comprising conveying the organic phase from the at least one plate decanter into each of the first cascade of two sets of three centrifuges Cfgₖ arranged in parallel, wherein k =1, 2, 3, 4, 5, or 6 wherein Cfg₁, Cfg₂, Cfg₃, are arranged in series and Cfg₄, Cfg₅, and Cfg₆ are arranged in series thereby separating a wastewater phase Wₖ from an organic phase Oₖ and conveying organic phase Oₖ₋₁ into the next centrifuge in series which separates the conveyed Oₖ₋₁ phase into an organic phase Oₖ and a wastewater phase Wₖ.

7. A continuous process for the removal of impurities from a reaction mixture comprising polycarbonate, comprising:
(a) providing a reaction mixture from a two-phase interfacial reaction for the preparation of polycarbonate;
(b) conveying the reaction mixture into a separation device comprising a first plate decanter thereby providing effluent from the first plate decanter consisting of a first organic phase and a first aqueous phase; and
(c) conveying the first organic phase from the first plate decanter into a second plate decanter thereby separating the first organic phase into a second organic phase and a second aqueous phase.

8. The continuous process according to claim 7, further comprising conducting the second organic phase from the second plate decanter into at least one coalescer decanter thereby separating the second organic phase into a wastewater phase and a third organic phase.

## Patentansprüche

1. Ein kontinuierliches Verfahren zur Entfernung von Verunreinigungen aus einer Reaktionsmischung umfassend Polycarbonat, das folgendes umfasst:
(a) Bereitstellung einer Reaktionsmischung aus einer Zweiphasen-Grenzflächen-Reaktion zur Herstellung von Polycarbonat; und
(b) Förderung der Reaktionsmischung in eine Trenneinrichtung, die mindestens eine Dekantier-Phasentrennvorrichtung aufweist, wodurch die Reaktionsmischung in eine organische Phase und eine wässrige Phase getrennt wird;
weiterhin umfassen die Förderung der organischen Phase aus der Dekantier-Phasentrennvorrichtung in mindestens eine Zentrifuge, wodurch eine Abwasser-Phase von der organischen Phase abgetrennt wird; oder
weiterhin umfassend die Förderung der organischen Phase aus der mindestens einen Dekantier-Phasentrennvorrichtung in mindestens eine Dekantier-Koalesziervorrichtung, wodurch eine Abwasser-Phase von der organischen Phase abgetrennt wird.

2. Kontinuierliches Verfahren nach Anspruch 1, weiterhin umfassend die Förderung der organischen Phase aus der mindestens einen Dekantier-Koalesziervorrichtung in mindestens eine Zentrifuge, wodurch eine Abwasser-Phase von der organischen Phase abgetrennt wird.

3. Kontinuierliches Verfahren nach Anspruch 1, weiterhin umfassend die Förderung der organischen Phase aus der mindestens einen Dekantier-Phasentrennvorrichtung in eine erste Zentrifuge einer Kaskade von Zentrifugen Cfgₖ, die in Serie angeordnet sind, wodurch eine Abwasser-Phase Wₖ von der organischen Phase Oₖ abgetrennt wird, und die Förderung der separierten organischen Phase zur nächsten Zentrifuge Cfgₖ in der Serie, welche die geförderten Oₖ₋₁ Phasen in eine organische Phase Oₖ und eine Abwasser-Phase Wₖ auftrennt.

4. Kontinuierliches Verfahren nach Anspruch 3, wobei k = 1, 2 oder 3 ist.

5. Kontinuierliches Verfahren nach Anspruch 1, weiterhin umfassend die Leitung der organischen Phase aus der mindestens einen Dekantier-Phasentrennvorrichtung in eine Kaskade von Dekantier-Koalesziervorrichtungen Cₙ, die in Serie angeordnet sind, wodurch eine Abwasser-Phase Wₙ von der organischen Phase Oₙ abgetrennt wird, und die Förderung der organischen Phase 0ₙ₋₁ in die nächste Dekantier-Koalesziervorrichtung Cₙ in der Serie, und die Abtrennung einer organischen Phase Oₙ und einer Abwasser-Phase Wₙ.

6. Kontinuierliches Verfahren nach Anspruch 1, weiterhin umfassend die Förderung der organischen Phase aus der mindestens einen Dekantier-Phasentrennvorrichtung in jede der ersten Kaskaden von zwei Sätzen von drei Zentrifugen Cfgₖ, die parallel angeordnet sind, wobei k = 1, 2, 3, 4, 5 oder 6 ist, wobei Cfg₁, Cfg₂, Cfg₃ in Serie angeordnet sind und Cfg₄, Cfg₅ und Cfg₆ in Serie angeordnet sind, wodurch eine Abwasser-Phase Wₖ von einer organischen Phase Oₖ abgetrennt wird und die Förderung der organischen Phase Oₖ₋₁ in die nächste Zentrifuge in der Serie, welche die geförderte Oₖ₋₁ Phase in eine organische Phase Oₖ und eine Abwasser-Phase Wₖ auftrennt.

7. Kontinuierliches Verfahren zur Entfernung von Verunreinigungen aus einer Reaktionsmischung umfassend Polycarbonat, wobei das Verfahren folgendes umfasst:
(a) die Bereitstellung einer Reaktionsmischung aus einer Zweiphasen-Grenzflächenreaktion zur Herstellung von Polycarbonat;
(b) die Förderung der Reaktionsmischung in eine Trenneinrichtung, die eine erste Dekantier-Phasentrenneinrichtung umfasst, wodurch ein erster Abstrom aus der ersten Dekantier-Phasentrennvorrichtung geschaffen wird, welcher aus einer ersten organischen Phase und einer ersten wässrigen Phase besteht; und
(c) die Förderung der ersten organischen Phase aus der ersten Dekantier-Phasenrrennvorrichtung in eine zweite Dekantier-Phasentrennvorrichtung, wodurch die erste organische Phase in eine zweite organische Phase und eine zweite wässrige Phase aufgetrennt wird.

8. Kontinuierliches Verfahren nach Anspruch 7, weiterhin umfassend die Leitung der zweiten organischen Phase aus der zweiten Dekantier-Phasentrennvorrichtung in mindestens eine Dekantier-Koalesziervorrichtung, wodurch die zweite organische Phase in eine Abwasser-Phase und eine dritte organische Phase aufgetrennt wird.

## Revendications

1. Procédé, mis en oeuvre en continu, de séparation d'impuretés d'un mélange réactionnel comprenant un polycarbonate, lequel procédé comporte :
a) le fait de prendre un mélange réactionnel issu d'une réaction depréparation de polycarbonate se déroulant à l'interface de deux phases,
b) et le fait d'envoyer ce mélange réactionnel dans un dispositif de séparation comprenant au moins un décanteur à plaques, et de séparer ainsi ce mélange réactionnel en une phase organique et une phase aqueuse,
comporte en outre le fait d'envoyer la phase organique depuis le décanteur à plaques dans au moins une centrifugeuse, et de séparer ainsi une phase d'eau usée de la phase organique ou bien comporte en outre le fait d'envoyer la phase organique depuis le décanteur à plaques au nombre d'au moins un dans au moins un décanteur à coalescence, et de séparer ainsi une phase d'eau usée de la phase organique.

2. Procédé mis en oeuvre en continu, conforme à la revendication 1, qui comporte en outre le fait d'envoyer la phase organique depuis le décanteur à coalescence au nombre d'au moins un dans au moins une centrifugeuse, et de séparer ainsi une phase d'eau usée de la phase organique.

3. Procédé mis en oeuvre en continu, conforme à la revendication 1, qui comporte en outre le fait d'envoyer la phase organique depuis le décanteur à plaques au nombre d'au moins un dans la première centrifugeuse d'une cascade de centrifugeuses Cfgₖ disposées en série, et de séparer ainsi une phase d'eau uséeWₖ d'une phase organique 0_{k'} et le fait d'envoyer la phase organique séparée dans la centrifugeuse suivante Cf_{qk} de la série, qui sépare la phase 0ₖ₋₁ envoyée en une phase organique 0ₖ et une phase d'eau usée Wₖ.

4. Procédé mis en oeuvre en continu, conforme à la revendication 3, dans lequel k vaut 1, 2 ou 3.

5. Procédé mis en oeuvre en continu, conforme à la revendication 1, qui comporte en outre le fait d'envoyer la phase organique depuis le décanteur à plaques au nombre d'au moins un dans une cascade de décanteurs à coalescence Cₙ disposés en série, et de séparer ainsi une phase d'eau usée Wₙ d'une phase organique 0ₙ. et le fait d'envoyer la phase organique 0ₙ₋₁ dans le décanteur à coalescence suivant Cₙ de la série et de séparer une phase organique 0ₙ et une phase d'eau uséeWₙ.

6. Procédé mis en oeuvre en continu, conforme à la revendication 1, qui comporte en outre le fait d'envoyer la phase organique depuis le décanteur à plaques au nombre d'au moins un dans chacune des premières centrifugeuses de deux jeux de trois centrifugeuses Cfgₖ, disposés en parallèle, k valant 1,2,3,4,5 ou 6, Cfg₁,Cfg₂ et Cfg₃ étant disposées en série et cfg₄, Cfg₅ et Cfg₆ étant disposées en série, et de séparer ainsi une phase d'eau usée Wₖ d'une phase organique 0ₖ, et le fait d'envoyer la phase organique 0ₖ₋₁ dans la centrifugeuse suivante de la série, qui sépare la phase 0ₖ₋₁ envoyée en une phase organique 0ₖ et une phase d'eau usée Wₖ.

7. Procédé, mis en oeuvre en continu, de séparation d'impuretés d'un mélange réactionnel comprenant un polycarbonate, lequel procédé comporte :
a) le fait de prendre un mélange réactionnel issu d'une réaction de préparation de polycarbonate se déroulant à l'interiace de deux phases,
b) le fait d'envoyer ce mélange réactionnel dans un dispositif de séparation comprenant un premier décanteur à plaques, lequel premier décanteur à plaques donne un effluent constitué d'une première phase organique et d'une première phase aqueuse,
c) et le fait d'envoyer la première phase organique issue du premier décanteur à plaques dans un deuxième décanteur à plaques, et de séparer ainsi la première phase organique en une deuxième phase organique et une deuxième phase aqueuse.

8. Procédé mis en oeuvre en continu, conforme à la revendication 7, qui comporte en outre le fait d'envoyer la deuxième phase organique issue du deuxième décanteur à plaques dans au moins un décanteur à coalescence, et de séparer ainsi la deuxième phase organique en une phase d'eau usée eL une troisième phase organique.
